(19) Europäisches Patentamt
European Patent Office
Office européen des brevets

(11) **EP 3 275 075 B1**

(12) # EUROPÄISCHE PATENTSCHRIFT

(45) Veröffentlichungstag und Bekanntmachung des Hinweises auf die Patenterteilung:
**29.12.2021 Patentblatt 2021/52**

(21) Anmeldenummer: **16711297.8**

(22) Anmeldetag: **23.03.2016**

(51) Int Cl.:
*H02P 25/22* *(2006.01)*     *H02P 6/10* *(2006.01)*
*H02P 9/02* *(2006.01)*     *H02P 21/13* *(2006.01)*

(86) Internationale Anmeldenummer:
**PCT/EP2016/056375**

(87) Internationale Veröffentlichungsnummer:
**WO 2016/151014 (29.09.2016 Gazette 2016/39)**

(54) **VERFAHREN ZUM STEUERN EINES SYNCHRONGENERATORS EINER GETRIEBELOSEN WINDENERGIEANLAGE**

METHOD FOR CONTROLLING A SYNCHRONOUS GENERATOR OF A GEARLESS WIND ENERGY TURBINE

PROCÉDÉ DE COMMANDE D'UN GÉNÉRATEUR SYNCHRONE D'UNE ÉOLIENNE À ENTRAÎNEMENT DIRECT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2015 DE 102015205348**

(43) Veröffentlichungstag der Anmeldung:
**31.01.2018 Patentblatt 2018/05**

(73) Patentinhaber: **Wobben Properties GmbH**
**26607 Aurich (DE)**

(72) Erfinder:
• **ENGELKEN, Sönke**
**28215 Bremen (DE)**
• **STRAFIEL, Christian**
**26603 Aurich (DE)**
• **GIENGIEL, Wojciech**
**26607 Aurich (DE)**

• **GERTJEGERDES, Stefan**
**26603 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 2 043 255     WO-A2-2010/034821**
**CN-A- 101 640 423     DE-A1-102011 089 498**

• **XI XIAO ET AL: "Dynamic Permanent Magnet Flux Estimation of Permanent Magnet Synchronous Machines", IEEE TRANSACTIONS ON APPLIED SUPERCONDUCTIVITY, IEEE SERVICE CENTER, LOS ALAMITOS, CA, US, Bd. 20, Nr. 3, 1. Juni 2010 (2010-06-01), Seiten 1085-1088, XP011305381, ISSN: 1051-8223 in der Anmeldung erwähnt**

**Beschreibung**

Die vorliegende Erfindung betrifft ein Verfahren zum Steuern eines Synchrongenerators einer getriebelosen Windenergieanlage. Außerdem betrifft die vorliegende Erfindung eine Generatoreinheit mit einem Synchrongenerator einer getriebelosen Windenergieanlage und einen damit verbundenen Gleichrichter. Außerdem betrifft die vorliegende Erfindung eine Windenergieanlage.

Windenergieanlagen sind bekannt. Sie erzeugen elektrische Energie aus Wind. Dazu verwenden viele moderne Windenergieanlagen einen Synchrongenerator, der angetrieben durch den Wind einen Wechselstrom erzeugt. Dieser Wechselstrom wird gleichgerichtet und über einen Wechselrichter, in ein elektrisches Versorgungsnetz eingespeist.

Getriebelose Windenergieanlagen treiben dabei den Synchrongenerator, genauer gesagt seinen Rotor, der auch synonym als Läufer bezeichnet werden kann, unmittelbar durch einen aerodynamischen Rotor an, der Rotorblätter aufweist und durch den Wind angetrieben wird. Entsprechend dreht sich der Läufer bzw. Rotor des Generators mit derselben Drehzahl wie der aerodynamische Rotor, nämlich vergleichsweise langsam. Die Drehzahl kann hierbei etwa im Bereich von 5 bis 15 Umdrehungen pro Minute liegen. Entsprechend wird ein sehr hochpoliger Generator vorgesehen. Dieser ist vorzugsweise als Ringgenerator ausgestaltet, weist also die elektrisch und elektromagnetisch wirksamen Bereiche nur auf einem ringförmigen Abschnitt auf, der auch den Luftspalt beinhaltet.

Ein solcher Generator einer getriebelosen Windenergieanlage weist regelmäßig einen Durchmesser im Bereich von 5 m auf. Manche Exemplare, wie beispielsweise eine Windenergieanlage vom Typ E126 der ENERCON GmbH, weist sogar einen Ringspaltdurchmesser von etwa 10 m auf. Solche Generatoren bestimmen häufig zumindest die ungefähre Baugröße der Gondel der Windenergieanlage. Diese Generatoren können dabei Geräusche erzeugen, die sie aufgrund ihrer Größe entsprechend auch an die Umwelt abgeben können und die sie darüber hinaus, was häufig der größere Anteil sein kann, über damit verbundene Elemente, wie Gondelverkleidung bzw. Spinner und Rotorblätter an die Umwelt abstrahlen können. Solche Geräuschentwicklungen sind grundsätzlich unerwünscht. Obwohl diese Geräusche in vergleichsweise großer Höhe über dem Erdboden abgegeben werden, können diese dennoch auch am Boden in der Nähe der Windenergieanlage deutlich wahrgenommen werden. Entsprechend gibt es Forderungen, Windenergieanlagen möglichst von Siedlungen und anderen von Menschen genutzten Gebieten fernzuhalten. Durch diese Forderungen erhöhter Abstände schwinden die möglichen Gebiete zum Aufstellen von Windenergieanlagen und das Aufstellen von Windenergieanlagen wird somit zunehmend schwieriger.

In der prioritätsbegründenden deutschen Patentanmeldung hat das Deutsche Patent- und Markenamt die folgenden Dokumente recherchiert: US 2003 / 0 085 627 A1 und WO 2013 / 175 050 A1. Zudem hat die Internationale Recherchenbehörde die nachfolgenden Dokumente als Entgegenhaltungen recherchiert, nämlich das Dokument CN 101640423 A, das ein 6-phasiges Generatorsystem einer getriebelosen Windenergieanlage mit einem permanenterregten Synchrongenerator zeigt, das Dokument EP 2 043 255 A2, das ein System zum Steuern von Drehmomentwellen in einer permanenterregten Synchronmaschine in einer Windenergieanlage mit Getriebe zeigt sowie das Dokument WO 2010/034821 A1, das ein Verfahren und ein Gerät zur dynamischen Lastenverteilung zwischen einem ersten und einem zweiten Dreiphasensystem zeigt.

Der vorliegenden Erfindung liegt somit die Aufgabe zugrunde, zumindest eines der oben genannten Probleme zu adressieren. Insbesondere soll eine Lösung zur Verringerung der Schallabgabe von Windenergieanlagen angegeben werden. Zumindest soll im Vergleich zu bisher bekannten Lösungen eine alternative Lösung vorgeschlagen werden.

Erfindungsgemäß wird ein Verfahren zum Steuern eines Synchrongenerators einer getriebelosen Windenergieanlage gemäß Anspruch 1 vorgeschlagen. Der Synchrongenerator weist hierbei einen mit dem aerodynamischen Rotor gekoppelten elektromagnetischen Rotor, oder einfach Rotor bzw. Läufer und einen Stator auf, um elektrische Leistung zu erzeugen. Die Erzeugung erfolgt dadurch, dass der Rotor bzw. Läufer relativ zum Stator gedreht wird. Nachfolgend wird der Begriff Rotor verwendet, um den Läufer bzw. Rotor des Generators zu bezeichnen.

Es wird dann ein mehrphasiger Ausgangsstrom am Stator erzeugt und dieser Ausgangsstrom wird dem Gleichrichter zugeführt. Es wird nun vorgeschlagen, dass der Ausgangsstrom durch den Gleichrichter so gesteuert wird, dass eine Drehmomentwelligkeit des Generators verringert wird. Der Gleichrichter steuert also den Ausgangsstrom am Stator und steuert damit im Ergebnis den Statorstrom. Der Gleichrichter weist dafür gesteuerte Dioden oder gesteuerte Halbleiterschalter auf, so dass der Ausgangsstrom des Stators gesteuert werden kann, wobei die Steuerung so erfolgt, dass eine Drehmomentwelligkeit des Generators verringert wird.

Eine Drehmomentwelligkeit beinhaltet auch Rastmomente, die sich ergeben, wenn ein Rotorpol bei der Drehung des Rotors Übergänge von einem zum nächsten Statorzahn passiert. Zusätzlich zu Rastmomenten gibt es einen weiteren Effekt durch einen in Statorkoordinaten nicht sinusförmigen Rotorfluss..

Diese Drehmomentwelligkeit hängt auch von dem relevanten aktuellen Statorstrom ab. Es wird nun vorgeschlagen, entsprechend den Statorstrom so zu steuern, dass der Oberwelligkeit entgegengewirkt wird. Idealerweise wird sie auf null reduziert. Veranschaulichend und vereinfachend ausgerückt, wird der Statorstrom so gesteuert, dass ihm eine reziproke Oberwelligkeit überlagert wird. Rastmomente können auch außerdem gezielt kompensiert werden, wenn man sie kennt. Es bleiben dennoch Drehmomentschwankungen übrig, die zu erfassen und zu berücksichtigen sind.

Durch eine entsprechende Steuerung des Gleichrichters kann eine solche Beeinflussung des Statorstroms und damit des Magnetfeldes im Stator beeinflusst werden. Auf die gesamte Energiebilanz dürfte das keinen oder keinen signifikanten Einfluss haben, weil sich entsprechende Überlagerungen des Statorstroms etwa herausmitteln sollten.

Vorzugsweise wird somit dem Ausgangsstrom, also dem Ausgangsstrom des Stators, durch diese Steuerung durch den Gleichrichter eine Stromform aufgeprägt. Besonders wird ihm eine Oberwelligkeit aufgeprägt. Idealerweise ist der Statorstrom sinusförmig. Die Stromform für ein gleichförmiges Drehmoment hängt von der Bauform des Generators ab, und von dem Arbeitspunkt. Dadurch, dass die Übergänge zwischen den Statorzähnen nicht ideal sind, ergibt sich bei idealem sinusförmigen Statorstrom die beschriebene Oberwelligkeit. Wird nun dem Statorstrom, vereinfacht ausgedrückt eine reziproke Oberwelligkeit aufgeprägt, kann diese die Oberwelligkeit durch die Übergänge von einem zum nächsten Statorzahn kompensieren. Soweit diese ideale Kompensation aber nicht erreicht werden kann, sollte zumindest eine Verringerung der Drehmomentoberwelligkeit hierdurch erreicht werden können.

Gemäß einer Ausführungsform ist der Synchrongenerator als sechsphasiger Generator ausgebildet und der Gleichrichter ist als ein sechsphasiger geregelter Gleichrichter ausgeführt. Somit kann hierbei ein sechsphasiges System gesteuert werden. Vorzugsweise ist dieses sechsphasige System als zwei dreiphasige Systeme ausgeführt, die zueinander um 30° phasenverschoben sind. Die beiden dreiphasigen Systeme können hierbei besonders im Stator galvanisch getrennt geführt sein. Sie sind aber auf demselben Stator vorgesehen, insbesondere gewickelt, und können am Gleichrichter auf denselben Gleichstromzwischenkreis speisen. Insbesondere sind aber beide dreiphasigen Systeme und damit das sechsphasige System vorzugsweise bei der Steuerung als Gesamtsystem zu berücksichtigen. Entsprechend ist hier der sechsphasige, geregelte Gleichrichter vorgesehen. Insbesondere kann dieser durch die entsprechend gesteuerte Gleichrichtung dem Ausgangsstrom des Stators, also dem sechsphasigen Ausgangsstrom, eine entsprechende Stromform aufprägen. Insoweit ist unter einem sechsphasigen Strom ein System aus sechs Einzelströmen zu verstehen, die eben hinsichtlich ihrer sinusförmigen Grundwelle in entsprechender Relation zueinander stehen, nämlich um ein Vielfaches von 30° zueinander verschoben sind.

Gemäß einer Ausgestaltung wird von dem magnetischen Fluss ausgegangen, den der Rotor aufweist, der als Rotorfluss bezeichnet werden kann, und ggf. auch von dem, den der Stator bzw. die Maschine insgesamt aufweist, der vereinfachend als Statorfluss bezeichnet werden kann. Hierbei wird vorgeschlagen, dass der Ausgangsstrom, also der Ausgangsstrom des Stators, in Abhängigkeit des magnetischen Flusses des Rotors, also des Rotorflusses, gesteuert wird. Der magnetische Fluss des Rotors bzw. Rotorfluss ist somit zumindest eine Eingangsgröße für diese Steuerung zur Verringerung der Drehmomentwelligkeit. Der Rotorfluss wird dabei besonders auch für die Steuerung des Ausgangsstroms des sechsphasigen Synchrongenerators bzw. sechsphasigen Gleichrichters verwendet. Überhaupt kann durch das vorgeschlagene Verfahren, besonders auch durch die Verwendung des Rotorflusses, eine Steuerung des Ausgangsstroms auch für das sechsphasige System zur Verringerung der Drehmomentwelligkeit erreicht werden.

Eine Ausgestaltung schlägt dabei vor, dass zum Steuern des Ausgangsstroms der Rotorfluss durch Verwendung eines Zustandsbeobachters beobachtet wird. Der Ausgangsstrom, also der Statorstrom wird dann in Abhängigkeit des beobachteten Rotorflusses gesteuert.

Problematisch bei der Verwendung des Rotorflusses ist, dass dieser nicht einfach gemessen werden kann. Und wenn er gemessen werden kann oder gemessen wird, können Probleme bei der Genauigkeit auftreten, insbesondere ist hierbei die zeitliche Genauigkeit von Bedeutung. Physikalische Effekte der Messung und der Auswertung der Messung können, ganz abgesehen von dem apparativen Aufwand der nötig wäre, Probleme bei der Verwendung in der Regelung bereiten. Entsprechend wird hier ein Zustandsbeobachter vorgeschlagen. Dieser Zustandsbeobachter kann die entsprechenden Zustände, nämlich insbesondere hier den Rotorfluss, beobachten. Das bedeutet, dass der Zustandsbeobachter den Rotorfluss aus Kenntnis des Systems und weiterer Eingangsgrößen, ggf. nur einer weiteren Eingangsgröße, ermitteln kann.

Eine Möglichkeit, die zumindest ein Prinzip eines Zustandsbeobachters plastisch erläutern kann, besteht darin, dass der Zustandsbeobachter so aufgebaut ist, dass er ein zu dem zu beobachtenden System paralleles Modell betreibt, das das System beschreibt. Über den Vergleich wenigstens einer Ausgangsgröße des Systems mit der entsprechenden Ausgangsgröße des Modells wird versucht, die Zustände des Modells, die die beobachteten Zustände des Systems sind, möglichst den tatsächlichen Zuständen des Systems anzugleichen. Damit wird besonders erreicht, dass die auf diese Art und Weise beobachteten Zustände, nämlich besonders Komponenten des beobachteten Rotorflusses, den tatsächlichen Zuständen, also den Komponenten des tatsächlichen Rotorflusses, nicht hinterher eilen. Entsprechend kann auch die Steuerung zeitlich akkurat durchgeführt werden.

Dabei ist in Erinnerung zu rufen, dass der Ausgangsstrom des Stators so gesteuert werden soll, dass, vereinfacht ausgedrückt, die Oberwelligkeit des Drehmomentes möglichst kompensiert werden soll, insbesondere durch entsprechend reziprokes Aufschalten einer entsprechenden Stromform kompensiert werden soll. Wäre eine solche Aufschaltung eines entsprechend welligen Stromsignals nicht ausreichend zeitakkurat, würde sogar riskiert werden, dass sich die Drehmomentwelligkeit sogar noch erhöhen kann. Durch die Verwendung des Zustandsbeobachters wird dies vermieden.

Eine bevorzugte Ausführungsform schlägt vor, dass der Generator sechsphasig ausgebildet ist, nämlich mit einem Stator mit einer Doppel-Stern-Beschaltung mit nicht verbundenen Sternpunkten. Es sind also zwei dreiphasige Systeme in dem Stator vorgesehen, die jeweils für sich im Stern geschaltet sind. Die beiden Sternpunkte sind nicht verbunden, insbesondere sind sie auch nicht über einen gemeinsamen Nullleiter indirekt verbunden. Somit sind auch diese beiden dreiphasigen Systeme für sich genommen - zwangsläufig - symmetrisch.

Der Generator weist hierzu im Betrieb ein Drehmoment auf, das durch die Wechselwirkung durch Ströme und Flüsse hervorgerufen wird und diese Größen werden durch eine Koordinatentransformation in ein doppeltes D/Q-System mit vier Achsen transformiert. Dabei wird jeder der vier Achsen je eine Stromkomponente und je eine Rotorflusskomponente zugeordnet.

Somit baut dieser Ansatz auf einer einfachen D/Q-Koordinatentransformation auf, bei der nämlich ein dreiphasiges System in ein System mit zwei orthogonalen Komponenten, nämlich der D-Komponente und der Q-Komponente, transformiert wird.

Zur Erfassung dieses sechsphasigen Systems wird entsprechend eine Transformation in zwei entsprechende D/Q-Systeme vorgeschlagen, was hier als doppeltes D/Q-System bzw. doppelte D/Q-Transformation bezeichnet wird und nachfolgend auch noch beispielhaft anhand der Rechenvorschriften näher erläutert wird.

Es wird hierbei jeder der vier Achsen, die in diesem doppelten D/Q-System auftreten, je eine Statorstromkomponente und je eine Rotorflusskomponente zugeordnet. Es gibt also sowohl für den Statorstrom als auch für den Rotorfluss eine erste D-Komponente, eine erste Q-Komponente, eine zweite D-Komponente und eine zweite Q-Komponente. Der Statorstrom wird hier vereinfachend nur als Strom bezeichnet. Gleiches gilt sinngemäß für die Stromkomponenten und den Sollstrom, die sich grundsätzlich auf den Stator beziehen.

In diesem System wird dann zum Vorgeben eines konstanten Solldrehmomentes, das idealerweise erreicht werden sollte, nämlich ohne Oberwellen, ein Sollstromvektor mit je einem Sollstrom für jede der vier Achsen vorgegeben. Der Sollstromvektor weist also vier Stromkomponenten auf, nämlich jeweils zwei für das erste D/Q-System und zwei für das zweite D/Q-System.

Hierüber kann nun auf einfach Art und Weise ein Sollstromvektor und damit Sollwerte zum Steuern des Ausgangsstroms vorgegeben werden. Zur Umsetzung ist schließlich noch eine Rücktransformation vorzusehen, bzw. eine Transformation in die entsprechenden Schaltbefehle bzw. Ansteuerbefehle für den gesteuerten Gleichrichter.

Gemäß einer Ausführungsform wird vorgeschlagen, dass zur Steuerung des Ausgangsstroms eine Zustandsraumdarstellung verwendet wird, die eine Beobachtbarkeit einer Rotorflusskomponenten zulässt. Zunächst bedeutet das, dass überhaupt eine Darstellung in Form einer Zustandsraumdarstellung gewählt wird. Dem Fachmann ist der Begriff der Zustandsraumdarstellung oder Zustandsraumbeschreibung geläufig. Dennoch sei an dieser Stelle erwähnt, dass hierbei besonders in Abgrenzung zu einer Eingangs-Ausgangsbeschreibung einzelne, auch interne Zustandsgrößen in ihrem Zusammenwirken beschrieben werden. Dies erfolgt regelmäßig über ein entsprechendes Gleichungssystem, das auch in einer Matrixschreibweise zusammengefasst werden kann. Als Zustandsgrößen können die Rotorflusskomponenten gewählt werden.

Zusätzlich kann die Systembeschreibung auch die Statorflusskomponenten mit einbeziehen und sinngemäß wie die Rotorflusskomponenten behandeln. Hierdurch sind die gewählten Zustandsgrößen, das kann dann die Rotorflusskomponenten und die Statorflusskomponenten beinhalten, in der gewählten Systemdarstellung als entsprechende Systemzustände vorhanden und können mit einem Modell, das diese Systemzustände beinhaltet, abgerufen werden.

Die Beobachtbarkeit eines Systems ist grundsätzlich zwar eine Systemeigenschaft, kann aber durch geeignete Beschreibung des Systems, insbesondere durch geeignete Wahl der Ein- und/oder Ausgangsgrößen beeinflusst werden. Werden besonders Ausgangsgrößen gewählt, die unmittelbar und eindeutig von den zu beobachtenden Systemgrößen abhängen, kann eine Beobachtbarkeit gegeben sein. In diesem Sinne wird also die Zustandsraumdarstellung so ausgewählt, dass die Rotorflusskomponenten Systemzustände bilden und beobachtbar sind.

Vorzugsweise wird vorgeschlagen, dass außerdem eine Beobachtbarkeit aller magnetischer Statorflusskomponenten gegeben ist. Besonders wird hier vorgeschlagen, dass alle Rotorflusskomponenten und alle Statorflusskomponenten in der Zustandsraumdarstellung als Systemzustände verwendet werden. Systemzustände oder Systemzustandsgrößen können hier regelungstechnisch vereinfacht auch einfach als Zustände bezeichnet werden.

Die Darstellung muss dabei nicht auf die Verwendung von Rotorflusskomponenten als Zustände ausschließlich bzw. auf die die Verwendung von Rotorflusskomponenten und Statorflusskomponenten ausschließlich beschränkt sein. Es können auch weitere Systemzustände vorhanden sein.

Eine weitere Ausführungsform schlägt vor, dass die Rotorflusskomponenten und ggf. auch die Statorflusskomponenten basierend auf der Darstellung in dem transformierten doppelten D/Q-System mit vier Achsen durch einen Kalmanfilter beobachtet werden. Demnach werden also die Rotorflusskomponenten als Zustände gewählt, ggf. zusätzlich auch die Statorflusskomponenten. In beiden Fällen kann dann eine Darstellung dieses Systems in dem transformierten doppelten D/Q-System erfolgen. Hierauf basierend erfolgt dann die Beobachtung mittels eines Kalmanfilters. Es erfolgt also eine Zustandsbeobachtung, nämlich eine Ermittlung der entsprechenden Zustandsgrößen, also der Rotorflusskomponenten und ggf. zusätzlich der Statorflusskomponenten, der ein Modell des zu beobachtenden Systems zugrunde liegt.

Über die Berücksichtigung dieses Modells, die Berücksichtigung von Ein- und Ausgangsgrößen, die Berücksichtigung besonders einer Abweichung oder Abweichungen des Ausgangssystems oder der Ausgangssignale zwischen dem System einerseits und dem Modell andererseits und unter Berücksichtigung stochastischer Überlegungen zu Störgrößen liefert der Kalmanfilter Werte für die jeweils zu beobachtenden Systemzustände. Darauf basierend können Sollwerte für den Statorstrom bestimmt und dann über eine entsprechende Ansteuerung des Gleichrichters umgesetzt werden.

Die Verwendung eines Kalmanfilters wird besonders für die oben entsprechend beschriebenen Ausführungsformen vorgeschlagen, wird hier aber auch, besonders zur Berücksichtigung von Störgrößen, als grundsätzlicher Lösungsansatz für die Ausgestaltung eines Zustandsbeobachters vorgeschlagen. Es ist zu beachten, dass die zu vermeidende Drehmomentschwankung ein systematisches, zyklisches Problem ist. Dennoch hat sich herausgestellt und wurde erfindungsgemäß erkannt, dass eine gute Lösung besonders bei Berücksichtigung stochastischer Störungen geschaffen werden kann und die Verwendung eines Kalmanfilters dabei als Lösung vorgeschlagen wird.

Erfindungsgemäß wird zudem eine Generatoreinheit gemäß Anspruch 10 vorgeschlagen. Eine solche Generatoreinheit weist einen Synchrongenerator einer getriebelosen Windenergieanlage und einen damit verbundenen Gleichrichter auf. Die Synchrongeneratoreinheit ist dazu vorbereitet, den Synchrongenerator durch ein Verfahren gemäß wenigstens einer der vorstehend beschriebenen Ausführungsformen zu steuern. Insoweit benötigt die Generatoreinheit den Synchrongenerator und den Gleichrichter und diese beiden Elemente wirken dabei zusammen, weil der erzeugte Strom, nämlich insbesondere der Statorstrom, durch den Synchrongenerator erzeugt, aber durch den damit verschalteten Gleichrichter beeinflusst wird.

Durch diese Gesamtheit und die Steuerung dieser Gesamtheit kann zunächst der erzeugte Strom gesteuert werden und damit ist es dann auch möglich, Geräusche zu reduzieren, besonders solche, die durch Drehmomentschwankungen auftreten können. Diese Drehmomentschwankungen hängen nicht zuletzt vom Statorstrom ab und darüber kann diese Beeinflussung vorgenommen werden.

Erfindungsgemäß wird zudem eine Windenergieanlage vorgeschlagen, die eine Generatoreinheit gemäß wenigstens einer Ausführungsform aufweist. Die im Zusammenhang mit obigen Ausführungsformen beschriebenen Vorteile sind letztlich hilfreich, Drehmomentschwankungen im Betrieb des Generators zu reduzieren. Dadurch können auch etwaige Vibrationen reduziert werden. Vibrationen können wiederum Geräuschentwicklungen zur Folge haben. Solche Geräuschentwicklungen bzw. auch unmittelbar die Vibrationen werden besonders auf großflächige Elemente der Windenergieanlagen übertragen und von diesen als Schall abgestrahlt. Dazu können die Gondelverkleidung und auch die Rotorblätter gehören. Insoweit ist die Reduzierung dieser Schwankungen des Drehmomentes des Generators für die Windenergieanlage insgesamt, also mit Generatoreinheit, nämlich mit Generator und angeschlossenem Wechselrichter, von Bedeutung. Es kann die Windenergieanlage insgesamt dadurch leiser gemacht werden.

Nachfolgend wird die Erfindung anhand von Ausführungsformen unter Bezugnahme auf die begleitenden Figuren exemplarisch näher erläutert.

Fig. 1 zeigt eine Windenergieanlage in einer perspektivischen Ansicht schematisch.

Fig. 2 zeigt schematisch einen Aufbau einer Anordnung zum Einspeisen mit einem Synchrongenerator mit einem damit verschalteten Gleichrichter und weiterer Verschaltung.

Fig. 3 zeigt schematisch weiteren Aufbau einer Generatoreinheit, nämlich eines Synchrongenerators mit einem damit verschalteten Gleichrichter.

Fig. 4 zeigt schematisch eine Veranschaulichung eines Verfahrens zum Steuern eines Synchrongenerators einschließlich der Verwendung eines Beobachters.

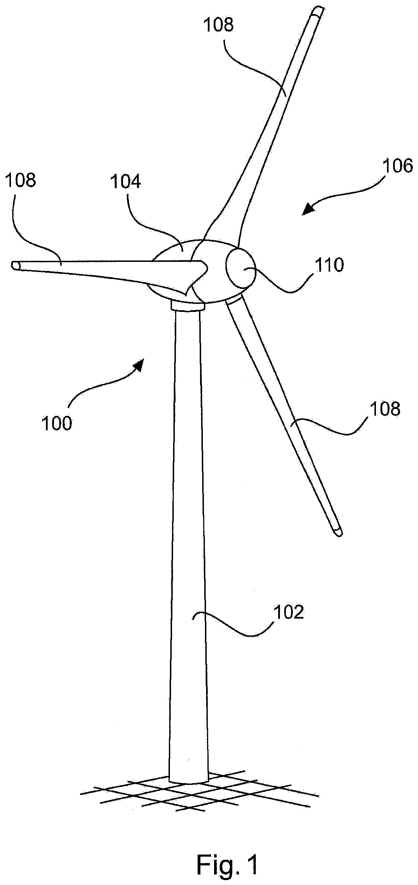

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

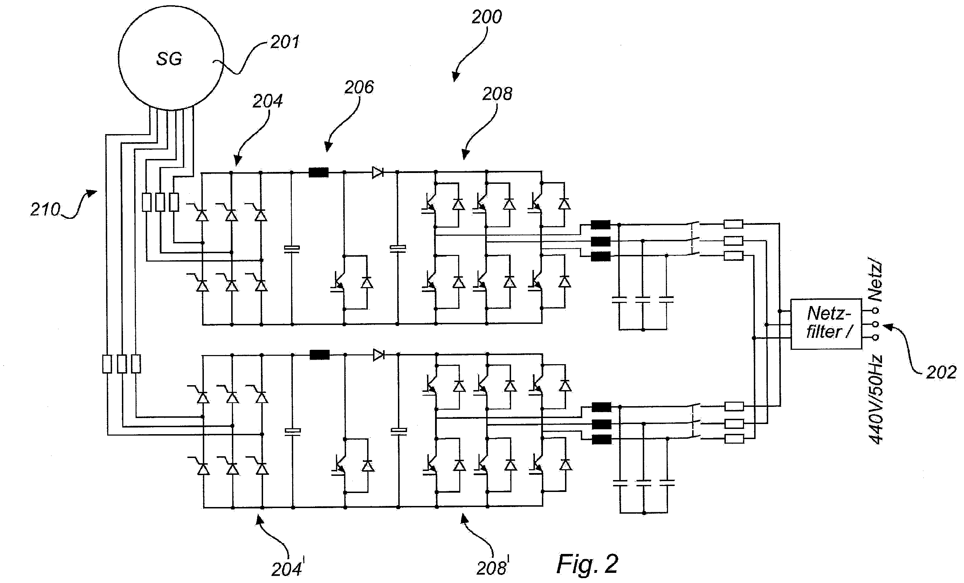

Fig. 2 zeigt eine Anordnung 200 zum Einspeisen elektrischen Stroms aus einem Synchrongenerator 201 in ein elektrisches Netzwerk 202. Hierzu ist der Synchrongenerator 201 vorgesehen, um elektrischen Strom zu erzeugen, der einer Gleichrichtereinheit 204 zugeführt und dort gleichgerichtet wird. Zum Erhöhen der dabei entstehenden Gleichspannung kann ein Hochsetzsteller 206 vorgesehen sein und zum Erzeugen eines elektrischen Wechselstroms ist ein Wechselrichter 208 vorgesehen.

Der gezeigte Synchrongenerator 201 weist zwei Dreiphasensysteme auf, so dass insgesamt sechs Stromleitungen 210 vorgesehen sind, nämlich jeweils zweimal drei Leitungen. Die beiden Dreiphasensysteme werden hier getrennt auf jeweils einen Gleichrichter 204 bzw. 204' geführt und auch getrennt jeweils mit einem Wechselrichter 208 bzw. 208' in Wechselstrom umgewandelt. Vorzugsweise wird aber vorgeschlagen, dass die beiden Dreiphasensysteme nach dem Gleichrichten zusammengeführt und auf einen einzigen Gleichspannungszwischenkreis geführt werden.

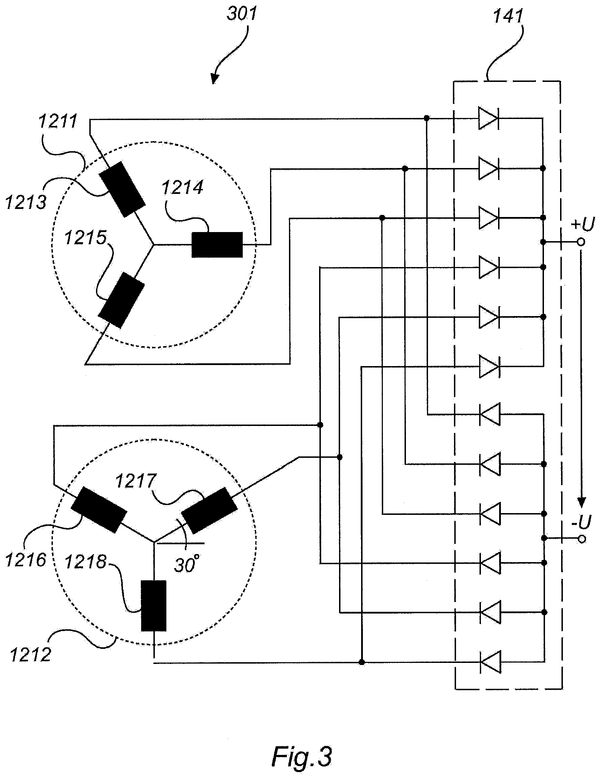

In diesem Sinne veranschaulicht Fig. 3 einen Synchrongenerator 301, der ebenfalls zwei Dreiphasensysteme aufweist, nämlich ein erstes Dreiphasensystem 1211 und ein zweites Dreiphasensystem 1212. Diese beiden Dreiphasensysteme 1211 und 1212 betreffen soweit den Stator des Synchrongenerators 301. Sie sind hier schematisch und nur zur Veranschaulichung als getrennte Kreise gezeichnet, werden aber baulich auf einem Statorträger, insbesondere Statorring angeordnet. Der Rotor ist hier der besseren Übersichtlichkeit halber nicht dargestellt und kann als vielpoliger Rotor mit einer Gleichstromerregung ausgebildet sein. Auch die beiden Dreiphasensysteme 1211 und 1212 des Stators sind hier veranschaulichend jeweils mit einer ersten, zweiten und dritten Phase 1213, 1214 und 1215 bzw. 1216, 1217 und 1218 dargestellt. Jede dieser Phasen kann aber durch eine Vielzahl von besonders in Reihe geschalteten Wicklungen gebildet sein. Die jeweils induzierte dreiphasige Spannung bzw. der resultierende dreiphasige Strom wird dann in dem Gleichrichter 141 gleichgerichtet und steht dem Gleichspannungszwischenkreis 143 als Gleichspannung weiter zur Verfügung.

Somit wird hier eine Gleichspannung, nämlich am Gleichspannungszwischenkreis 143 aus den beiden dreiphasigen Systemen erzeugt.

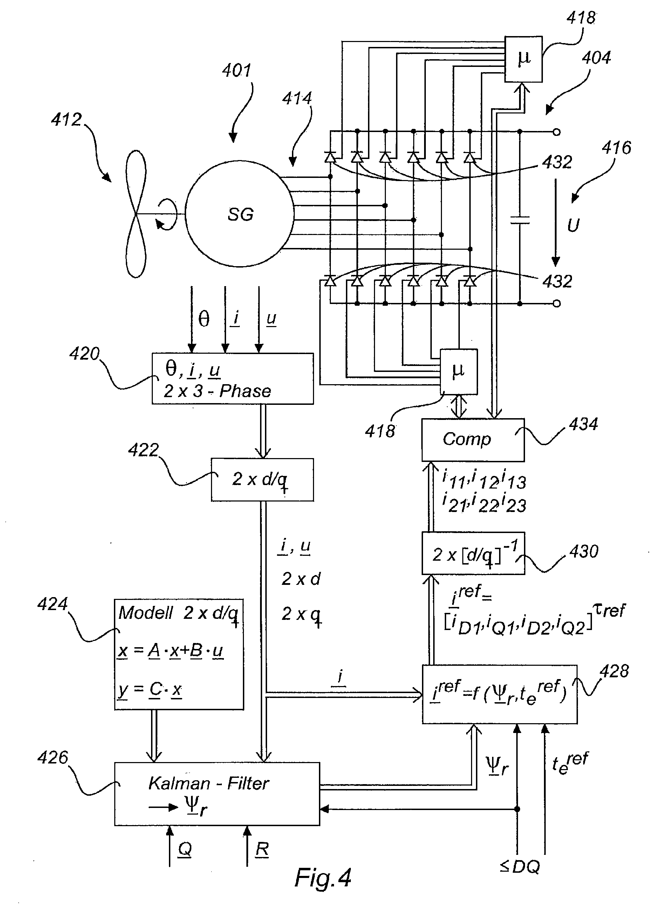

Fig. 4 erläutert nun schematisch eine Ausgestaltung eines erfindungsgemäßen Verfahrens zum Steuern eines Synchrongenerators.

Zunächst geht das Verfahren von einem Synchrongenerator 401 aus, der durch einen aerodynamischen Rotor 412 angetrieben wird. Der Synchrongenerator 401 weist zwei Dreiphasensysteme auf, so dass sechs Ausgangsleitungen 414 von ihm abgehen und zu einem gesteuerten Gleichrichter 404 führen. Die beiden Dreiphasensysteme können in dem Synchrongenerator 401 im Stern geschaltet sein, wie dies z.B. auch in Fig. 3 gezeigt ist. Auch der Gleichrichter 404 entspricht dem Gleichrichter 141 gemäß Fig. 3 insoweit, als dass die beiden Dreiphasensysteme zu einer gemeinsamen Gleichspannung 416 gleichgerichtet werden.

Zur Steuerung des Gleichrichters 404 sind schematisch zwei Steuereinheiten 418 dargestellt, die ein Teil des nachfolgend noch beschriebenen Verfahrens umsetzen und auch in einer einzigen Steuereinheit und in diversen verteilten einzelnen Steuereinheiten realisiert sein können. Die Steuereinheiten 418 können auch mit anderen Steuereinheiten, die beispielsweise später zum Wechselrichten der Gleichspannung 416 benötigt werden, zusammengefasst sein.

Das Verfahren arbeitet nun so, dass zunächst der Drehwinkel $\theta$, der die aktuelle Drehposition des Rotors des Synchrongenerators 401 angibt, aufgenommen wird. Gleichzeitig werden die Ausgangsströme und die Ausgangsspannungen des Synchrongenerators 401 aufgenommen. Dazu ist der Messblock 420 vorgesehen. Dort sind vereinfachend die aufgenommenen Ausgangsströme als i symbolisiert und die aufzunehmenden Ausgangsspannungen, die jeweils als Leiter-Sternpunkt-Spannung aufgenommen werden können, als u symbolisiert.

In dem Messblock 420 stehen somit Strom und Spannung für zwei Dreiphasensysteme als Messwerte zur Verfügung sowie der Drehwinkel $\theta$.

Diese Werte werden dann an einen Transformationsblock 422 übertragen und dort wird eine sogenannte d/q-Transformation für jede dieser beiden Phasen durchgeführt. Das Ergebnis sind dann sowohl für den Strom i als auch die Spannung u für jedes der beiden Dreiphasensysteme jeweils eine d-Komponente und eine q-Komponente. Für jeden Transformationszeitpunkt liegen somit insgesamt acht Komponenten vor.

Gleichzeitig oder auch vorher wird in den Modellblock 424 ein grundsätzliches Modell des verschalteten Synchrongenerators in Zustandsraumdarstellung bereitgestellt. Gegenüber einem vollständigen klassischen Zustands-Modell enthält dieses keinen D-Anteil, demnach also keine Stellgröße u, die unmittelbar, also ohne Dynamik, auf den Ausgang y wirkt. Rein vorsorglich wird darauf hingewiesen, dass in dem Zustandsraummodell und in diesem Absatz der Buchstabe u nicht für die elektrische Spannung u steht, insbesondere nicht für die, die an dem Synchrongenerator 401 von dem Messblock 420 gemessen wurde, sondern allgemein für Stellgröße steht, und dass der genannt D-Anteil nicht für die d-Komponente der Transformation in das d/q-System steht.

Der Beobachterblock 426 verwendet nun das Modell des Modellblocks 424, um damit unter Berücksichtigung der d-Komponenten und q-Komponenten, die er von dem Transformationsblock 422 erhält, den Rotorfluss $\Psi_r$ möglichst akkurat und zeitgenau zu beobachten. Neben den Eingangsgrößen und der Modellbeschreibung werden dazu die Filtermatrizen $\underline{Q}$ und $\underline{R}$ benötigt. Diese geben die gewünschte Dynamik, insbesondere mit der ein Beobachtungsfehler ausgeregelt werden soll, vor und berücksichtigen das zu erwartende Störverhalten bzw. die zu erwartenden Störungen. In dem Beobachterblock 426 wird somit ein Kalman-Filter realisiert. Dieser beobachtet oder bestimmt den Rotorfluss $\Psi_r$, kann aber auch durch entsprechende Modellerweiterung in dem Modellblock 424 weitere Größen, insbesondere auch den Statorfluss $\Psi_r$ mit beobachten.

Darauf aufbauend kann dann die Parametrisierung des Kalman-Filters, insbesondere der Filtermatrizen Q und R in bekannter Weise, insbesondere durch Lösung entsprechender Matrix-Riccati-Gleichung ausgelegt werden.

In die Ausgangsmatrix C fließt die Induktivität $L_{DQ}$ ein, wie unten noch im Detail erläutert werden wird. Es kann auch sinnvoll sein und wird gemäß einer Ausführungsform vorgeschlagen, dass die Induktivität $\underline{L}_{DQ}$ variabel ist und diese kann dann eine weitere Eingangsgröße für den Beobachterblock 426 bilden.

Mithilfe des so beobachteten Rotorflusses $\Psi_r$ wird nun im Referenzblock 428 ein Referenzstrom $\underline{i}^{ref}$ bestimmt. Dieser Referenzstrom ist hier ein Vektor mit vier Komponenten und weist Stromwerte auf, die einzustellen sind, um ein gewünschtes, nämlich insbesondere oberwellenfreies oder zumindest oberwellenarmes Generatormoment zu erhalten.

Dieser Referenzstrom $\underline{i}^{\text{ref}}$ wird abhängig von dem beobachteten Rotorfluss $\Psi_r$ und dem gewünschten Drehmoment $t_e^{\text{ref}}$ bestimmt und ist deshalb in dem Referenzblock 428 als $\underline{i}^{\text{ref}} = f(\Psi_r, t_e^{\text{ref}})$ dargestellt.

Wenn von einer veränderlichen Induktivität $\underline{L}_{DQ}$ ausgegangen wird, fließt auch diese in den Referenzblock 428 und damit die Berechnung des Referenzstroms ein.

Dieser so bestimmte Referenzstrom wird dann an den Rücktransformationsblock 430 übergeben. An dem Übergabepfeil von dem Referenzblock 428 zum Rücktransformationsblock 430 ist auch die Zusammensetzung des Referenzstromes gezeigt.

Es ist noch zu beachten, dass die Bestimmung des Referenzstroms $\underline{i}^{\text{ref}}$ auch von dem erfassten und im Transformationsblock 422 transformierten Ausgansstrom $\underline{i}$ abhängen kann. Entsprechend ist auch dieser Strom $\underline{i}$ als Eingangsgröße in dem Referenzblock 428 dargestellt.

In dem Rücktransformationsblock 430 wird dann der Referenzstrom $\underline{i}^{\text{ref}}$ durch zwei D/Q-Rücktransformationen zurücktransformiert, so dass drei Stromkomponenten für jedes der beiden Dreiphasensysteme erhalten werden, nämlich ein Stromwert je Phase und Dreiphasensystem. Das Ergebnis des Rücktransformationsblocks 430 sind somit die drei Stromkomponenten $i_{11}$, $i_{12}$, $i_{13}$ für das erste dreiphasige System und $i_{21}$, $i_{22}$ und $i_{23}$ für das zweite dreiphasige System. Diese Stromwerte sind die Sollwerte, die insoweit an die Steuereinheiten 418 gegeben werden, so dass diese in dem Gleichrichter 404 die entsprechenden gesteuerten Dioden 432 möglichst so ansteuern, dass sich die entsprechenden Ströme einstellen.

Dafür kann eine Berechnungseinheit 434 vorgesehen bzw. vorgelagert sein, die beispielsweise an die Steuereinheiten 418 konkrete Werte gibt, wie z.B. konkrete Stromwerte, wobei dann den Steuereinheiten 418 die konkrete Ansteuerung der betreffenden Halbleiterschalter 432 zukommen würde. Dabei sind auch andere Topologien der Umsetzung denkbar.

Die Erfindung bezieht sich somit gemäß wenigstens einer konkrete Ausführungsform auf ein Stromregelverfahren welches gerätetechnisch durch einen geregelten Gleichrichter in Verbindung mit einer sechs-phasigen, elektrisch oder permanent erregten Synchronmaschine implementiert werden kann. Das Stromregelverfahren zielt auf eine Aufprägung einer Stromform auf den Stator der Synchronmaschine, die unter Berücksichtigung der Maschineneigenschaften und des dynamischen Zustands der Synchronmaschine zu einer möglichst konstanten elektrischen Drehmomentabgabe führt.

Das elektrische Drehmoment eines sechs-phasigen Generators mit Doppel-Stern-Beschaltung mit nicht verbundenen Sternpunkten kann unter Verwendung einer bestimmten Koordinatentransformation vom Phasenkoordinatensystem in ein geeignetes vierachsiges doppeltes D/Q-System ausgedrückt werden. Eine mögliche Koordinatentransformation ergibt sich aus

$$f_{DQ} = T(\theta) f_{abc},$$

worin $f_{DQ} = [f_{D1}\, f_{Q1}\, f_{D2}\, f_{Q2}]^T$ den Vektor von D/Q-Koordinatengrößen (Strom oder Spannung) und $f_{abc} = [f_{a1}\, f_{b1}\, f_{c1}\, f_{a2}\, f_{b2}\, f_{c2}]^T$ den dazu gehörigen Vektor in Phasenkoordinatengrößen bezeichnet, und

$$T(\theta) = \frac{1}{\sqrt{2}} \begin{bmatrix} T_P(\theta) & T_P(\theta - \alpha) \\ T_P(\theta + \alpha + \pi/2) & T_P(\theta - \alpha - \pi/2) \end{bmatrix},$$

die Transformationsmatrix bezeichnet, worin wiederum $T_P(\theta)$ die dreiphasige Park- oder D/Q-Transformationsmatrix

$$T_P(\theta) = \sqrt{2/3} \begin{bmatrix} \cos\theta & \cos(\theta - 2\pi/3) & \cos(\theta + 2\pi/3) \\ -\sin\theta & \sin(\theta - 2\pi/3) & \sin(\theta + 2\pi/3) \end{bmatrix},$$

bezeichnet und $\alpha$ die Hälfte des Phasenversatzes zwischen den zwei Statorsystemen, also in diesem Fall 15° beträgt.

Unter Verwendung dieser Transformation kann das elektrische Drehmoment des Generators durch folgende Gleichung beschrieben werden was in [1]: S.Kallio, M. Andriollo, A.Tortella und J.Karttunen, "Decoupled d-q model of double-star interior permanentmagnet synchronaus machines, " IEEE Transactions on Industrial Electronics, pp. 2486-2494,Juni 2013 beschrieben ist:

$$t_e = n_p \left( i_{Q_1} \Psi_{D_1}^* + i_{Q_2} \Psi_{D_2}^* - i_{D_1} \Psi_{rQ_1} - i_{D_2} \Psi_{rQ_2} \right),$$

worin $n_p$ die Polpaarzahl des Generators, $i_*$ (* = $D_1$, $D_2$, $Q_1$ oder $Q_2$) den Statorstrom in der entsprechenden Koordinatenachse im doppelten DQ-System und $\Psi_{r*}$ den magnetischen Fluss in der entsprechenden DQ-Koordinatenachse der durch den Rotor des Generators hervorgerufen wird (entweder durch Permanentmagneten oder eine Erregerwicklung) bezeichnet, sowie

$$\Psi_{D_1}^* = i_{D_1}\left(L_{D_1} - L_{Q_1}\right) + \Psi_{rD_1},$$

$$\Psi_{D_2}^* = i_{D_2}\left(L_{D_2} - L_{Q_2}\right) + \Psi_{rD_2},$$

worin wiederum $L_*$ (* = $D_1$, $D_2$, $Q_1$ oder $Q_2$) eine im entsprechenden Koordinatensystem konstante Statoreigeninduktivität in der jeweiligen Achse bezeichnet. Die Induktivitäten können im Voraus für alle relevanten Arbeitspunkte der Synchronmaschine bestimmt werden.

Zur Erbringung eines konstanten Soll-Drehmoments $t_e^{ref}$ kann nun in den vier Achsen des doppelten DQ-Koordinatensystems der folgende Stromsollwertvektor $i^{ref} = \left[i_{D_1}^{ref}\ i_{Q_1}^{ref}\ i_{D_2}^{ref}\ i_{Q_2}^{ref}\right]^T$ vorgegeben werden, was in [2] X. Kestelyn und E. Semail,"A vectorial approach for generation of optimal current references for multiphase permanent-magnet synchronaus machines in real time, "IEEE Transoctions on Industrial Electronics, pp. 5057-5065,November 2011: beschrieben ist:

$$i^{ref} = \frac{J(\Psi_r + L^*i)}{\|\Psi_r + L^*i\|^2} t_e^{ref},$$

worin $\Psi_r = [\Psi_{rD_1}\ \Psi_{rQ_1}\ \Psi_{rD_2}\ \Psi_{rQ_2}]^T$, $i = [i_{D_1}\ i_{Q_1}\ i_{D_2}\ i_{Q_2}]^T$, $\|\ \|$ die euklidische Norm bezeichnet sowie

$$J = \begin{bmatrix} 0 & -1 & 0 & 0 \\ 1 & 0 & 0 & 0 \\ 0 & 0 & 0 & -1 \\ 0 & 0 & 1 & 0 \end{bmatrix}, L^* = \begin{bmatrix} L_{D_1} - L_{Q_1} & 0 & 0 & 0 \\ 0 & 0 & 0 & 0 \\ 0 & 0 & L_{D_2} - L_{Q_2} & 0 \\ 0 & 0 & 0 & 0 \end{bmatrix}.$$

Die tatsächliche Regelung der Statorströme durch den Gleichrichter zur Erreichung der Sollwerte kann zum Beispiel durch einen Hystereseregler (Toleranzbandverfahren) erfolgen.

Eine solche Stromsollwertvorgabe setzt jedoch voraus, dass der Vektor $\Psi_r$ bekannt ist. Der magnetische Fluss ist nur unter großem Aufwand messbar, kann jedoch über einen Zustandsbeobachter geschätzt werden, was grundsätzlich z.B. in [3]: X.Xi,C.Changming und Z.Meng,"Dynamic Permanent Magnet Flux Estimation of Permanent Magnet Synchronaus Machines," IEEE Transactions an Applied Superconductivity, pp- 1085-1088, Juni 2010 bzw. [4]: V. Anno und S.Seung-Ki "Design of flux observer robust to interior permanent-magnetsynchronaus motor flux variations," IEEE Transactions on Industry Applications, pp. 1670-1677,September 2009 erläutert ist.

Eine Besonderheit der vorliegenden Erfindung liegt in einer von den bisher veröffentlichten Verfahren abweichenden Gleichungsform des Zustandsbeobachters, sowie in der Anwendung von Zustandsbeobachtern zur Schätzung des magnetischen Flusses von sechs-phasigen elektrischen Maschinen.

Wie in [3] wird der Zustandsbeobachter als erweiterter Kalman-Filter ausgeführt. Für die Synthese des Kalman-Filters wird ein Differentialgleichungssystem benötigt, das den Zustand des beobachteten Systems beschreibt. Darüber hinaus werden zwei Matrizen Q und R gewählt, die das Verhalten des Filters bei Mess- und Prozessrauschen beeinflussen. Die gewählte Formulierung des Zustandsraummodells weist gegenüber der in [3] gewählten Formulierung zwei wesentliche Unterschiede auf:

1. Es wird eine sechs-phasige statt einer drei-phasigen Synchronmaschine betrachtet.

2. Das Grundprinzip der Zustandsraumbeschreibung ist in dem hier beschriebenen Ansatz so gewählt, dass eine Beobachtbarkeit aller Zustände im Gegensatz zu [3] gewährleistet ist. Bei fehlender Beobachtbarkeit ist nicht garantiert, dass die geschätzten Zustände im Zeitverlauf auf die tatsächlichen physischen Werte konvergieren. Damit hängt die Lösung der zur Synthese des Kalman-Filters benötigten Gleichungen nur noch von der adäquaten Wahl der Matrizen Q und R ab.

Es wird folgende Zustandsraumbeschreibung verwendet:

$$\dot{x} = Ax + Bu$$

$$y = Cx,$$

worin

$$x = \left[\Psi_s^T \; \Psi_r^T\right]^T, \; y = i, \; u = \left[u_{D_1} \; u_{Q_1} \; u_{D_2} \; u_{Q_2}\right]^T,$$

und

$$A = \begin{bmatrix} -\omega J - R_s L_{DQ}^{-1} & R_s L_{DQ}^{-1} \\ 0_{4\times 4} & 0_{4\times 4} \end{bmatrix}, B = \begin{bmatrix} -I_4 \\ 0_{4\times 4} \end{bmatrix}, C = \begin{bmatrix} L_{DQ}^{-1} & -L_{DQ}^{-1} \end{bmatrix}.$$

Darin bezeichnet $\omega$ die elektrische Winkelgeschwindigkeit, die sich aus dem per Messung erfassten Winkel berechnen lässt, $R_s$ den Statorwindungswiderstand, sowie

$$L_{DQ} = \begin{bmatrix} L_{D1} & & & \\ & L_{Q1} & & \\ & & L_{D2} & \\ & & & L_{Q2} \end{bmatrix}.$$

Auf Basis dieses beobachtbaren Zustandsraummodells sowie der adäquaten Wahl der Matrizen Q und R ergibt sich automatisch eine Filtermatrix K, die in einem geschlossenen Filterkreis (Kalman-Filter-Standardkonfiguration) für die Schätzung der Magnetflusszustände genutzt wird. Die Matrix Q sollte so gewählt werden, dass ihre Elemente die Kovarianzen des erwarteten Rauschens der Zustandsvariablen abbilden, während R so gewählt werden sollte, dass die Elemente die Kovarianzen des erwarteten Messrauschens der gemessenen Ausgangsgrößen abbilden. Das ist bspw. in der unten genannten Literaturstelle [5] beschrieben. Das Stromregelverfahren sorgt somit über die oben dargestellte Herleitung für eine konstante elektrische Drehmomentabgabe der Synchronmaschine.

Für die Umsetzung in einem Steuerungsrechner werden die resultierenden Filter in zeitdiskreter Form implementiert. Für die Überführung eines zeitkontinuierlichen Entwurfs in zeitdiskrete Form sind zahlreiche Verfahren bekannt, siehe z.B.

[5] M.S. Grewal, A. P. Andrews: Kalman Filtering, 4. Ausgabe, New York: John Wiley & Sons, 2014.

Neben der Anwendung auf eine sechs-phasige Maschine ist auch eine Anwendung des Stromregelverfahrens auf eine drei-phasige Maschine möglich. Dann beziehen sich alle oben angeführten Größen mit dem Index $DQ$ auf die klassischen DQ-Größen für ein dreiphasiges System und die Größen mit dem Index $D_2$ oder $Q_2$ entfallen.

## Patentansprüche

1. Verfahren zum Steuern eines Synchrongenerators (401) einer getriebelosen Windenergieanlage (100), wobei der Synchrongenerator einen elektrodynamischen Rotor (412) und einen Stator (1211, 1212) aufweist, zum Erzeugen elektrischer Leistung durch ein Drehen des Rotors relativ zum Stator, umfassend die Schritte

   - Erzeugen eines mehrphasigen Ausgangsstroms am Stator,
   - Zuführen des Ausgangsstroms einem Gleichrichter (404),
   - Steuern des Ausgangsstroms durch den Gleichrichter so, dass eine Drehmomentwelligkeit des Generators verringert wird, **dadurch gekennzeichnet, dass** der Rotor einen magnetischen Rotorfluss aufweist und der Ausgangsstrom in Abhängigkeit des Rotorflusses gesteuert wird.

**2.** Verfahren nach Anspruch 1, **dadurch gekennzeichnet, dass** dem Ausgangsstrom durch einen geregelten Gleichrichter (404) eine Stromform aufgeprägt wird.

**3.** Verfahren nach Anspruch 1 oder 2, **dadurch gekennzeichnet, dass** der Synchrongenerator (401) als 6-phasiger Generator ausgebildet ist und als Gleichrichter (404) ein 6-phasiger geregelter Gleichrichter verwendet wird.

**4.** Verfahren nach einem der vorstehenden Ansprüche, **dadurch gekennzeichnet, dass** zum Steuern des Ausgangsstroms der Rotorfluss durch Verwendung eines Zustandsbeobachters (426) beobachtet wird und der Ausgangstrom in Abhängigkeit des beobachteten Rotorflusses gesteuert wird.

**5.** Verfahren nach einem der vorstehenden Ansprüche, **dadurch gekennzeichnet, dass**

- der Generator (401) 6-phasig ausgebildet ist mit einem Stator mit einer Doppel-Stern-Beschaltung mit nicht verbundenen Sternpunkten,
- der Generator im Betrieb ein elektrisches Drehmoment aufweist, das durch die Wechselwirkung durch Ströme und Flüsse hervorgerufen wird und diese Größen werden durch eine Koordinatentransformation in ein doppeltes D/Q-System mit vier Achsen transformiert wobei jeder der vier Achsen je einer Statorstromkomponente und je eine Rotorflusskomponente aufweist, und
- zum Vorgeben eines konstanten Solldrehmomentes ($te^{ref}$) ein Sollstromvektor mit je einem Sollstrom für jede der vier Achsen vorgegeben wird.

**6.** Verfahren nach einem der vorstehenden Ansprüche, **dadurch gekennzeichnet, dass** zur Steuerung des Ausgangsstroms eine Zustandsraumdarstellung verwendet wird, die eine Beobachtbarkeit aller Rotorflusskomponenten zulässt.

**7.** Verfahren nach Anspruch 6, **dadurch gekennzeichnet, dass** zur Steuerung des Ausgangsstroms des Stators eine Zustandsraumdarstellung verwendet wird, die eine Beobachtbarkeit aller Rotorflusskomponenten und aller Statorflusskomponenten zulässt.

**8.** Verfahren nach einem der vorstehenden Ansprüche, **dadurch gekennzeichnet, dass** die Rotorflusskomponenten und ggf. die Statorflusskomponenten basierend auf der Darstellung in dem transformierten doppelten D/Q-System mit vier Achsen durch einen Kalmanfilter (426) beobachtet werden.

**9.** Generatoreinheit mit einem Synchrongenerator (401) einer getriebelosen Windenergieanlage (100) und einem damit verbundenen Gleichrichter (404), wobei die Synchrongeneratoreinheit dazu vorbereitet ist, den Synchrongenerator durch ein Verfahren gemäß einem der vorstehenden Ansprüche zu steuern.

**10.** Windenergieanlage (100) mit einer Generatoreinheit gemäß Anspruch 9.

**Claims**

**1.** Method for controlling a synchronous generator (401) of a gearless wind turbine (100), the synchronous generator having an electrodynamic rotor (412) and a stator (1211, 1212) for producing electrical power by rotating the rotor relative to the stator, comprising the steps of

- generating a multiphase output current at the stator,
- supplying the output current to a rectifier (404),
- controlling the output current by means of the rectifier in such a manner that a torque ripple of the generator is reduced, **characterized in that** the rotor has a magnetic rotor flux and the output current is controlled in dependence on the rotor flux.

**2.** Method according to Claim 1, **characterized in that** a current waveform is impressed on the output current by means of a controlled rectifier (404).

**3.** Method according to Claim 1 or 2, **characterized in that** the synchronous generator (401) is in the form of a six-phase generator and a six-phase controlled rectifier is used as the rectifier (404).

4. Method according to one of the preceding claims, **characterized in that** the rotor flux is observed by using a state observer (426) in order to control the output current, and the output current is controlled in dependence on the observed rotor flux.

5. Method according to one of the preceding claims, **characterized in that**

   - the generator (401) has six phases and has a stator having double star connection with star points which are not connected,
   - during operation, the generator has an electrical torque which is caused by the interaction of currents and fluxes, and those variables are transformed into a double D/Q system with four axes using a coordinate transformation, each of the four axes having a respective stator current component and a respective rotor flux component, and
   - a desired current vector with a respective desired current for each of the four axes is predefined for the purpose of predefining a constant desired torque (te$^{ref}$).

6. Method according to one of the preceding claims, **characterized in that**, in order to control the output current, use is made of a state space representation, which allows observability of all rotor flux components.

7. Method according to Claim 6, **characterized in that**, in order to control the output current from the stator, use is made of a state space representation, which allows observability of all rotor flux components and all stator flux components.

8. Method according to one of the preceding claims, **characterized in that** the rotor flux components and possibly the stator flux components are observed on the basis of the representation in the transformed double D/Q system having four axes by means of a Kalman filter (426).

9. Generator unit having a synchronous generator (401) of a gearless wind turbine (100) and a rectifier (404) connected thereto, wherein the synchronous generator unit is prepared to control the synchronous generator by means of a method according to one of the preceding claims.

10. Wind turbine (100) having a generator unit according to Claim 9.


**Revendications**

1. Procédé pour commander un générateur synchrone (401) d'une éolienne (100) à entraînement direct, dans lequel le générateur synchrone présente un rotor (412) électrodynamique et un stator (1211, 1212), pour générer une puissance électrique par une rotation du rotor par rapport au stator, comprenant les étapes

   - de génération d'un courant de départ polyphasé sur le stator,
   - d'amenée du courant de départ à un redresseur (404),
   - de commande du courant de départ par le redresseur de telle sorte qu'une ondulation de couple de rotation du générateur est réduite, **caractérisé en ce que** le rotor présente un flux de rotor magnétique et le courant de départ est commandé en fonction du flux de rotor.

2. Procédé selon la revendication 1, **caractérisé en ce qu'**une forme de courant est imprimée sur le courant de départ par un redresseur (404) régulé.

3. Procédé selon la revendication 1 ou 2, **caractérisé en ce que** le générateur synchrone (401) est réalisé en tant que générateur à 6 phases et un redresseur régulé à 6 phases est utilisé en tant que redresseur (404).

4. Procédé selon l'une quelconque des revendications précédentes, **caractérisé en ce que** pour commander le courant de départ, le flux de rotor est observé par l'utilisation d'un observateur d'état (426) et le courant de départ est commandé en fonction du flux de rotor observé.

5. Procédé selon l'une quelconque des revendications précédentes, **caractérisé en ce que**

   - le générateur (401) est réalisé à 6 phases avec un stator avec un câblage à double étoile avec des points d'étoile non reliés,

- le générateur présente en fonctionnement un couple de rotation électrique, qui est entraîné par l'interaction liée aux courants et aux flux, et lesdites grandeurs sont transformées par une transformation de coordonnées en un double système D/Q avec quatre axes, dans lequel chacun des quatre axes présente respectivement une composante de courant de stator et respectivement une composante de flux de rotor, et

- pour spécifier un couple de rotation théorique constant (te$^{ref}$), un vecteur de courant théorique est spécifié avec respectivement un courant théorique pour chacun des quatre axes.

**6.** Procédé selon l'une quelconque des revendications précédentes, **caractérisé en ce que** pour commander le courant de départ, une représentation d'espace d'état est utilisée, qui autorise une observabilité de toutes les composantes de flux de rotor.

**7.** Procédé selon la revendication 6, **caractérisé en ce que** pour commander le courant de départ du stator, une représentation d'espace d'état est utilisée, qui autorise une observabilité de toutes les composantes de flux de rotor et de toutes les composantes de flux de stator.

**8.** Procédé selon l'une quelconque des revendications précédentes, **caractérisé en ce que** les composantes de flux de rotor et éventuellement les composantes de flux de stator sont observées sur la base de la représentation dans le double système D/Q transformé avec quatre axes par un filtre de Kalman (426).

**9.** Unité de générateur avec un générateur synchrone (401) d'une éolienne (100) à entraînement direct et un redresseur (404) relié à celle-ci, dans laquelle l'unité de générateur synchrone est préparée pour commander le générateur synchrone par un procédé selon l'une quelconque des revendications précédentes.

**10.** Eolienne (100) avec une unité de générateur selon la revendication 9.

Fig. 1

*Fig. 2*

*Fig.3*

*Fig.4*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030085627 A1
- WO 2013175050 A1
- CN 101640423 A
- EP 2043255 A2
- WO 2010034821 A1


**In der Beschreibung aufgeführte Nicht-Patentliteratur**

- **S.KALLIO ; M. ANDRIOLLO ; A.TORTELLA ; J.KARTTUNEN.** Decoupled d-q model of double-star interior permanentmagnet synchronaus machines. *IEEE Transactions on Industrial Electronics,* Juni 2013, 2486-2494
- **X. KESTELYN ; E. SEMAIL,.** A vectorial approach for generation of optimal current references for multiphase permanent-magnet synchronaus machines in real time. *IEEE Transoctions on Industrial Electronics,* November 2011, 5057-5065
- **X.XI ; C.CHANGMING ; Z.MENG,.** Dynamic Permanent Magnet Flux Estimation of Permanent Magnet Synchronaus Machines,. *IEEE Transactions an Applied Superconductivity,* Juni 2010, 1085-1088
- **V. ANNO ; S.SEUNG-KI.** Design of flux observer robust to interior permanent-magnetsynchronaus motor flux variations,. *IEEE Transactions on Industry Applications,* September 2009, 1670-1677
- **M.S. GREWAL ; A. P. ANDREWS.** Kalman Filtering. John Wiley & Sons, 2014